# EUROPEAN PATENT APPLICATION

(11) **EP 4 503 405 A1**
(43) Date of publication of application: **05.02.2025**
(21) Application number: 23773674.9
(22) Date of filing: 15.03.2023
(51) Int. Cl.: H02K 15/00, B23P 21/00, B23P 19/02

(54) **ELECTRIC MOTOR ASSEMBLY DEVICE**

(30) Priority: 24.03.2022 CN 202220677290 U
(71) Applicant: Beijing Chehejia Automobile Technology Co., Ltd., Beijing 101300 (CN)
(72) Inventor: LI, Wenbin, Beijing 101300 (CN)
(74) Representative: Maiwald GmbH
(86) International application number: PCT/CN2023/081665
(87) International publication number: WO 2023/179426

(57) **Abstract**

An electric motor assembly device, comprising a hoisting mechanism (1), a pressure mechanism, a pressing head mechanism (2), a control mechanism, and an assembly station, wherein the pressure mechanism comprises an abutting-pushing portion abutting against a bearing outer ring (41); the abutting-pushing portion can be pushed into the assembly station relative to a pressure mechanism body; an abutting-holding portion abutting against a bearing inner ring (42) is provided on the side of the pressing head mechanism (2) facing the assembly station; a clamping portion (11) connected to a rotor shaft (5) is provided on the side of the hoisting mechanism (1) facing the assembly station; and the clamping portion moves relative to the pressing head mechanism in a direction away from the assembly station. The electric motor assembly device can avoid damaging a bearing during the assembling process of the bearing, the rotor shaft and a housing of an electric motor.

## Description

### CROSS-REFERENCE TO RELATED APPLICATION

The present application is based on and claims the priority of Chinese patent application No. 202220677290.3 filed on March 24, 2022, the entire contents of which are incorporated herein by reference.

### FIELD

The present disclosure relates to the field of electric motor assembling, and more particularly to an electric motor assembling device.

### BACKGROUND

At present, an assembling manner of a bearing, a rotor shaft and a housing of an electric motor is that the bearing is firstly assembled with the rotor shaft to form a rotor assembly, and then the bearing of the rotor assembly is assembled in place with a bearing hole of the housing to complete the assembling of the electric motor.

However, when the bearing of the rotor assembly is installed into the bearing hole of the housing, there is an assembling resistance between the bearing hole and a bearing outer ring of the rotor assembly, so that a friction resistance is generated between the rotor shaft and a bearing inner ring, thus leading to opposite forces on the bearing inner ring and the bearing outer ring in an axial direction, which tends to cause bearing damages and affect the service life of the bearing.

### SUMMARY

In order to solve the above technical problems, the present disclosure provides an electric motor assembling device.

The present disclosure provides an electric motor assembling device, including a lifting mechanism, a pressure mechanism, a press head mechanism, an assembling station and a control mechanism. The pressure mechanism is located at one side of the assembling station, the lifting mechanism and the press head mechanism are located at the other side of the assembling station, and the pressure mechanism, the lifting mechanism and the press head mechanism are all electrically connected with the control mechanism. The pressure mechanism includes a pressure mechanism body and a pushing portion connected with the pressure mechanism body, and the pushing portion is configured to be pushed into the assembling station relative to the pressure mechanism body under the control of the control mechanism. The press head mechanism includes an abutting portion at a side of the press head mechanism facing the assembling station. The lifting mechanism includes a clamping portion at a side of the lifting mechanism facing the assembling station. The clamping portion is configured to move in a direction running away from the assembling station relative to the press head mechanism under the control of the control mechanism.

According to an embodiment of the present disclosure, the electric motor assembling device further includes a rotor shaft, and the rotor shaft is connected with the clamping portion. The lifting mechanism is arranged above the assembling station, and is configured to clamp the rotor shaft through the clamping portion, so that the clamping portion drives the rotor shaft to move in a direction approaching a bearing and to be fitted with a bearing inner ring under the control of the control mechanism. The abutting portion of the press head mechanism is configured to abut against a top of the bearing inner ring under the action of the control mechanism when the rotor shaft moves towards the bearing and is fitted with the bearing inner ring.

According to an embodiment of the present disclosure, the lifting mechanism further includes a connecting block connected with the clamping portion, and the connecting block is detachably connected with a rotor shaft of an electric motor.

According to an embodiment of the present disclosure, the clamping portion includes a first clamping body and a second clamping body, and one end of the first clamping body is connected with one end of the second clamping body; and the other end of the first clamping body and the other end of the second clamping body are attached to clamp the connecting block, or the other end of the first clamping body and the other end of the second clamping body are separated to release the connecting block.

According to an embodiment of the present disclosure, a first connecting portion is formed on the connecting block, a second connecting portion is formed on the rotor shaft at a position corresponding to the first connecting portion, and the connecting block is connected with the rotor shaft through the fit of the first connecting portion and the second connecting portion.

According to an embodiment of the present disclosure, the first connecting portion is a first connecting hole, the second connecting portion is a second connecting hole, and a fastener is arranged in the first connecting hole and the second connecting hole to realize the detachable connection between the rotor shaft and the connecting block.

According to an embodiment of the present disclosure, the first connecting portion is an engaging protrusion, the second connecting portion is an engaging groove engaged and fitted with the engaging protrusion, and the connecting block is detachably connected with the rotor shaft through the fit of the engaging protrusion and the engaging groove.

According to an embodiment of the present disclosure, the first connecting portion includes a connecting thread formed on an outer wall of the connecting block, and the second connecting portion includes a threaded hole fitted with the connecting thread.

According to an embodiment of the present disclosure, the first connecting portion includes an engaging groove formed on an outer wall of the connecting block, and the second connecting portion includes an engaging block engaged with the engaging groove.

According to an embodiment of the present disclosure, the connecting block includes a connecting head portion and a connecting rod portion located at a side of the connecting head portion adjacent to the assembling station, the connecting head portion is connected with the clamping portion, and the connecting thread is arranged on an outer wall of the connecting rod portion.

According to an embodiment of the present disclosure, an outer diameter of the connecting head portion is larger than an outer diameter of the connecting rod portion.

According to an embodiment of the present disclosure, the connecting head portion and the connecting rod portion are integrally formed.

According to an embodiment of the present disclosure, the abutting portion includes a first abutting portion arranged at a top of the lifting mechanism, and a second abutting portion and a third abutting portion respectively arranged at two sides of the first abutting portion.

According to an embodiment of the present disclosure, the first abutting portion, the second abutting portion and the third abutting portion are integrally formed.

According to an embodiment of the present disclosure, the second abutting portion and the third abutting portion are located at the top of the bearing inner ring and correspond to a position of the bearing inner ring, so as to abut against the top of the bearing inner ring when the rotor shaft moves towards the bearing and is fitted with the bearing inner ring.

The present disclosure provides the electric motor assembling device, which includes the lifting mechanism, the pressure mechanism, the press head mechanism, the control mechanism and the assembling station. The pressure mechanism is located at one side of the assembling station, the lifting mechanism and the press head mechanism are located at the other side of the assembling station, and the pressure mechanism, the lifting mechanism and the press head mechanism are all electrically connected with the control mechanism. The pressure mechanism includes the pressure mechanism body and the pushing portion configured to abut against the bearing outer ring, and the pushing portion is configured to push into the assembling station relative to the pressure mechanism body under the control of the control mechanism. The press head mechanism includes the abutting portion at the side of the press head mechanism facing the assembling station, and the abutting portion is configured to abut against the bearing inner ring. The lifting mechanism includes the clamping portion at the side of the lifting mechanism facing the assembling station, and the clamping portion is configured to be connected with the rotor shaft. The clamping portion is configured to move in a direction running away from the assembling station relative to the press head mechanism under the control of the control mechanism. That is, when the bearing outer ring is assembled with a housing, a force can be applied to the bearing outer ring through the pushing portion of the pressure mechanism, so that the bearing is press-fitted into a bearing hole of the housing at the assembling station, and the bearing inner ring is not stressed at this time. When the bearing inner ring is assembled with the rotor shaft, the rotor shaft can be driven by the lifting mechanism to move in the direction running away from the assembling station, so that the rotor shaft is installed in the bearing inner ring, and the bearing inner ring is abutted by the abutting portion of the press head mechanism, thus overcoming the acting force when the rotor shaft is assembled with the bearing inner ring. The bearing outer ring is not stressed at this time. That is, in the whole installation process, there are no opposite forces between the bearing inner ring and the bearing outer ring in an axial direction, so that the bearing can be prevented from being damaged to some extent, which otherwise will affect the service life of the bearing.

### BRIEF DESCRIPTION OF THE DRAWINGS

The accompanying drawings, which are incorporated in and constitute a part of the present specification, illustrate embodiments consistent with the present disclosure and together with the description, serve to explain the principles of the present disclosure.

In order to explain the technical solution in embodiments of the present disclosure or in the related art more clearly, the drawings needed in the description of the embodiments or the related art will be briefly introduced below. Obviously, for those ordinary skilled in the related art, other drawings can be obtained according to these drawings without making inventive labor.
Fig. 1 is a schematic view of an electric motor assembling device according to an embodiment of the present disclosure.
Fig. 2 is a schematic view of a connecting block of an electric motor assembling device according to an embodiment of the present disclosure.

### Reference numerals:

1 lifting mechanism; 11 clamping portion; 111 first clamping body; 112 second clamping body; 2 press head mechanism; 21 first abutting portion; 22 second abutting portion; 23 third abutting portion; 3 housing; 31 bearing hole; 4 bearing; 41 bearing outer ring; 42 bearing inner ring; 5 rotor shaft; 51 threaded hole; 6 connecting block; 61 connecting head portion; 62 connecting rod portion.

### DETAILED DESCRIPTION

In order to understand the above objects, features and advantages of the present disclosure more clearly, the solution of the present disclosure will be further described below. It should be noted that the embodiments of the present disclosure and the features in the embodiments can be combined with each other without conflict.

In the following description, many specific details are set forth in order to fully understand the present disclosure, but the present disclosure may be practiced in other ways than those described herein. Obviously, the embodiments in the specification are only part of the embodiments of the present disclosure, not all of the embodiments.

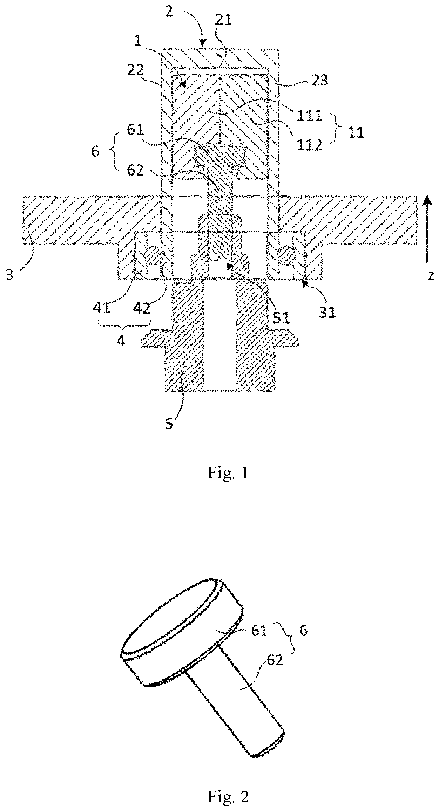

Referring to Fig. 1 and Fig. 2, the embodiments provide an electric motor assembling device, which includes a lifting mechanism 1, a pressure mechanism, a press head mechanism 2, a control mechanism and an assembling station. The pressure mechanism is located at one side of the assembling station, the lifting mechanism 1 and the press head mechanism 2 are located at the other side of the assembling station, and the pressure mechanism, the lifting mechanism 1 and the press head mechanism 2 are all electrically connected with the control mechanism.

The pressure mechanism 2 includes a pressure mechanism body and a pushing portion for abutting against a bearing outer ring 41, and the pushing portion can be pushed into the assembling station relative to the pressure mechanism body under the control of the control mechanism.

A side of the press head mechanism 2 facing the assembling station is provided with an abutting portion for abutting against a bearing inner ring 42. A side of the lifting mechanism 1 facing the assembling station is provided with a clamping portion 11 for connecting with a rotor shaft 5, and the clamping portion 11 can move in a direction running away from the assembling station relative to the press head mechanism 2 under the control of the control mechanism.

The assembling process includes the following steps. When the bearing outer ring 41 is assembled with a housing 3, a force is applied to the bearing outer ring 41 by the pushing portion of the pressure mechanism, so that a bearing 4 is press-fitted into a bearing hole 31 of the housing 3 at the assembling station, and at this time, the bearing inner ring 42 is not stressed. When the bearing inner ring 42 is assembled with the rotor shaft 5, the rotor shaft 5 is driven by the lifting mechanism 1 to move in the direction running away from the assembling station, so that the rotor shaft 5 is installed in the bearing inner ring 42, and the bearing inner ring 42 is abutted by the abutting portion of the press head mechanism 2, thus overcoming an acting force when the rotor shaft 5 is assembled with the bearing inner ring 42. At this time, the bearing outer ring 41 is not stressed. That is, in the whole installation process, there are no opposite forces between the bearing inner ring 42 and the bearing outer ring 41 in an axial direction, so that the bearing 4 can be prevented from being damaged to some extent, which otherwise will affect the service life of the bearing 4.

The realization of the electric motor assembling device includes the following steps. The pushing portion of the pressure mechanism can abut against a top of the bearing outer ring 41 of the bearing 4 of the electric motor, and apply an axial force to the bearing outer ring 41 under the control of the control mechanism, so that the bearing 4 moves in a direction approaching the housing 3 located at the assembling station and is installed in the bearing hole 31 of the housing 3 to form a housing bearing assembly. That is, when the housing 3 and the bearing 4 are assembled, the housing 3 can be placed at the assembling station first, the pushing portion of the pressure mechanism abuts against the bearing outer ring 41 of the bearing 4, and the bearing 4 is pressed and moved under the control of the control mechanism, so that the bearing 4 is press-fitted in the bearing hole 31 of the housing 3, to complete the assembling of the housing 3 and the bearing 4.

Then, after the housing 3 and the bearing 4 are assembled, the bearing 4 of the bearing housing assembly is assembled in place with the rotor shaft 5. Specifically, the assembling structure and process of the bearing 4 of the bearing housing assembly and the rotor shaft 5 are as follows. The bearing housing assembly is placed as a whole at the assembling station at this time, the press head mechanism 2 is located above the assembling station, and the abutting portion of the press head mechanism is pressed and arranged on the bearing inner ring 42 of the bearing housing assembly. At the same time, the clamping portion 11 of the lifting mechanism 1 is connected with the rotor shaft 5 of the electric motor, and clamps the rotor shaft 5 to move the rotor shaft 5 upwards under the control of the control mechanism, so as to press-fit the rotor shaft 5 in the bearing inner ring 42 of the bearing housing assembly, thus completing the assembling of the electric motor.

In some embodiments, the pressure mechanism can be a common press machine, etc., which is selected according to actual needs.

The lifting mechanism 1 is arranged above the assembling station, and is used for clamping the rotor shaft 5 of the electric motor through the clamping portion 11, so that the clamping portion 11 drives the rotor shaft 5 to move in a direction approaching the bearing 4 under the control of the control mechanism and to be fitted with the bearing inner ring 42 of the bearing housing assembly. The abutting portion of the press head mechanism 2 is used to abut against a top of the bearing inner ring 42 under the action of the control mechanism when the rotor shaft 5 moves towards the bearing 4 and is fitted with the bearing inner ring 42.

Specifically, the lifting mechanism 1 includes a lifting body and the clamping portion 11 for clamping the rotor shaft 5. The control mechanism controls the clamping portion 11 to drive the rotor shaft 5 to move towards the bearing 4, and the specific direction of moving towards the bearing 4 is a Z direction shown in Fig. 1. For the specific structure and implementation principle of the lifting body, reference can be made to the structure and principle of a lifting device in the related art, which is not specifically limited in the embodiments.

Specifically, as shown in Figs. 1 and 2, when it is inconvenient for the clamping portion 11 to extend into the housing 3 to clamp the rotor shaft 5, a connecting block 6 can also be provided, and the connecting block 6 is detachably connected with the rotor shaft 5. The clamping portion 11 clamps the connecting block 6 to move the connecting block 6 towards the bearing 4, so as to drive the rotor shaft 5 to move towards the bearing 4 and to be assembled in the bearing inner ring 42. The specific connection structure between the clamping portion 11 and the connecting block 6 can be as follows. The clamping portion 11 includes a first clamping body 111 and a second clamping body 112, one end of the first clamping body 111 is connected with one end of the second clamping body 112, and the other end of the first clamping body 111 and the other end of the second clamping body 112 can move towards each other to clamp the connecting block 6 or move away from each other to release the connecting block 6.

The connecting structure of the connecting block 6 and the rotor shaft 5 can be as follows. A first connecting portion is formed on the connecting block 6, a second connecting portion is formed on the rotor shaft 5 at a position corresponding to the first connecting portion, and the connecting block 6 is connected with the rotor shaft 5 through the fit of the first connecting portion and the second connecting portion, so that the connecting block 6 can be detached after the rotor shaft 5 is assembled in place.

For example, the first connecting portion includes a connecting thread formed on an outer wall of the connecting block, and the second connecting portion includes a threaded hole 51 fitted with the connecting thread. That is, a top end of the rotor shaft 5 is provided with an inner hole, and the inner hole specifically can be the threaded hole 51 engaged with the connecting thread. Specifically, as shown in Fig. 2, the connecting block 6 includes a connecting head portion 61 and a connecting rod portion 62 which can be integrally formed with the connecting head portion 61. An outer contour size of the connecting head portion 61 is larger than an outer diameter of the connecting rod portion 62, so that the clamping portion 11 can conveniently clamp the connecting head portion 61, and the connecting thread provided on an outer wall of the connecting rod portion 62 is engaged with the threaded hole 51.

For example, in other implementations, the first connecting portion can also be a first connecting hole and the second connecting portion is a second connecting hole, and a fastener is arranged in the first connecting hole and the second connecting hole to realize the detachable connection between the rotor shaft 5 and the connecting block 6. Or, the first connecting portion can also be an engaging protrusion, and the second connecting portion is an engaging groove which is engaged and fitted with the engaging protrusion, so that the rotor shaft 5 can be detachably connected with the connecting block 6 through the fit of the engaging protrusion and the engaging groove.

As shown in Fig. 1, the abutting portion of the press head mechanism 2 includes a first abutting portion 21 arranged at a top of the lifting mechanism 1, and a second abutting portion 22 and a third abutting portion 23 arranged at two sides of the first abutting portion 21. The second abutting portion 22 and the third abutting portion 23 are located at the top of the bearing inner ring 42 and correspond to the position of the bearing inner ring 42, so as to abut against the top of the bearing inner ring 42 when the rotor shaft 5 moves towards the bearing 4 and is fitted with the bearing inner ring 42, thereby overcoming the force exerted on the bearing inner ring 42 to ensure that the bearing outer ring 41 is not stressed. That is, there are no opposite forces between the bearing inner ring 42 and the bearing outer ring 41 in the axial direction, so that the bearing 4 can be prevented from being damaged to some extent, which otherwise will affect the service life of the bearing 4.

Specifically, the first abutting portion 21, the second abutting portion 22 and the third abutting portion 23 can be integrally formed, so as to save the process and improve the structural strength of the whole press head mechanism 2.

Specifically, the extension directions of the second abutting portion 22 and the third abutting portion 23 are both parallel to the direction of the rotor shaft 5 moving towards the bearing 4, so that the pressures exerted by the second abutting portion 22 and the third abutting portion 23 on the bearing inner ring 42 are axial forces, thus preventing a radial force from being generated to cause pressure and damage on the bearing outer ring 41.

To sum up, the embodiments provide the electric motor assembling device, and the assembling process of the electric motor is as follows. First, the bearing 4 is installed in the housing 3. At this time, due to the non-clearance fit between the bearing 4 and the bearing hole 31, a certain press-fitting force can be provided to the bearing outer ring 41 through the pressure mechanism during installation. In this process, only the bearing outer ring 41 is subjected to the press-fitting force and the bearing inner ring 42 is not stressed, thus ensuring that the bearing 4 itself will not be damaged in the assembling process.

Then, before a stator and a rotor of the electric motor are mould-assembled, the threaded connecting block 6 is installed at the end of the rotor shaft 5. After the stator and the rotor are mould-assembled until the connecting block 6 protrudes from the housing 3, the clamping portion 11 grabs the connecting block 6 and lifts the rotor shaft 5 upwards, so that the rotor shaft 5 is suspended and located in a fixed position. The stator and the rotor continue being mould-assembled until the bearing inner ring 42 is about to contact with the rotor shaft 5, the bearing inner ring 42 is pressed against by the press head mechanism 2, and the rotor shaft 5 is lifted up by the lifting mechanism 1 to be fitted with the bearing 4, so that the bearing 4 and the rotor shaft 5 are assembled in place and also the mould assembling of the stator and the rotor of the electric motor is completed. Finally, fixing bolts on the housing 3 are locked to complete the assembling of the electric motor assembly. In the whole assembling process, the bearing 4 itself can be completely avoided from being subjected to the acting force, which otherwise will case the risks of the bearing 4, such as damages to the bearing 4 and influences on the service life of the bearing 4.

It should be noted that relational terms such as "first" and "second" herein are only used to distinguish one entity or operation from another entity or operation, and do not necessarily require or imply that there is any such actual relationship or order between these entities or operations. Moreover, the term "include/comprise" or any other variation thereof is intended to cover non-exclusive inclusion, so that a process, a method, an article or an apparatus including/comprising a series of elements includes/comprises not only those elements, but also other elements not explicitly listed or elements inherent to such process, method, article or apparatus. Without further restrictions, an element defined by the phrase "including/comprising a/an" does not exclude the existence of other identical elements in the process, method, article or apparatus including/comprising the element.

The above description is only the specific embodiment of the present disclosure, so that those skilled in the art can understand or realize the present disclosure. Many modifications to these embodiments will be obvious to those skilled in the art, and the general principles defined herein can be implemented in other embodiments without departing from the spirit or scope of the present disclosure. Therefore, the present disclosure will not be limited to the embodiments described herein, but is to conform to the widest scope consistent with the principles and novel features disclosed herein.

## Claims

1. An electric motor assembling device, comprising a lifting mechanism, a pressure mechanism, a press head mechanism, an assembling station and a control mechanism,
wherein the pressure mechanism is located at one side of the assembling station, the lifting mechanism and the press head mechanism are located at the other side of the assembling station, and the pressure mechanism, the lifting mechanism and the press head mechanism are all electrically connected with the control mechanism;
the pressure mechanism comprises a pressure mechanism body and a pushing portion connected with the pressure mechanism body, and the pushing portion is configured to be pushed into the assembling station relative to the pressure mechanism body under the control of the control mechanism;
the press head mechanism comprises an abutting portion at a side of the press head mechanism facing the assembling station; and
the lifting mechanism comprises a clamping portion at a side of the lifting mechanism facing the assembling station, and the clamping portion is configured to move in a direction running away from the assembling station relative to the press head mechanism under the control of the control mechanism.

2. The electric motor assembling device according to claim 1, further comprising a rotor shaft, wherein the rotor shaft is connected with the clamping portion; the lifting mechanism is arranged above the assembling station, and is configured to clamp the rotor shaft through the clamping portion, so that the clamping portion drives the rotor shaft to move in a direction approaching a bearing and to be fitted with a bearing inner ring under the control of the control mechanism; and the abutting portion of the press head mechanism is configured to abut against a top of the bearing inner ring under the action of the control mechanism when the rotor shaft moves towards the bearing and is fitted with the bearing inner ring.

3. The electric motor assembling device according to claim 1, wherein the lifting mechanism further comprises a connecting block connected with the clamping portion, and the connecting block is detachably connected with a rotor shaft of an electric motor.

4. The electric motor assembling device according to claim 3, wherein the clamping portion comprises a first clamping body and a second clamping body, and one end of the first clamping body is connected with one end of the second clamping body; and the other end of the first clamping body and the other end of the second clamping body are attached to clamp the connecting block, or the other end of the first clamping body and the other end of the second clamping body are separated to release the connecting block.

5. The electric motor assembling device according to claim 3, wherein a first connecting portion is formed on the connecting block, a second connecting portion is formed on the rotor shaft at a position corresponding to the first connecting portion, and the connecting block is connected with the rotor shaft through the fit of the first connecting portion and the second connecting portion.

6. The electric motor assembling device according to claim 5, wherein the first connecting portion is a first connecting hole, the second connecting portion is a second connecting hole, and a fastener is arranged in the first connecting hole and the second connecting hole to realize the detachable connection between the rotor shaft and the connecting block.

7. The electric motor assembling device according to claim 5, wherein the first connecting portion is an engaging protrusion, the second connecting portion is an engaging groove engaged and fitted with the engaging protrusion, and the connecting block is detachably connected with the rotor shaft through the fit of the engaging protrusion and the engaging groove.

8. The electric motor assembling device according to claim 5, wherein the first connecting portion comprises a connecting thread formed on an outer wall of the connecting block, and the second connecting portion comprises a threaded hole fitted with the connecting thread.

9. The electric motor assembling device according to claim 5, wherein the first connecting portion comprises an engaging groove formed on an outer wall of the connecting block, and the second connecting portion comprises an engaging block engaged with the engaging groove.

10. The electric motor assembling device according to claim 8, wherein the connecting block comprises a connecting head portion and a connecting rod portion located at a side of the connecting head portion adjacent to the assembling station, and the connecting thread is arranged on an outer wall of the connecting rod portion.

11. The electric motor assembling device according to claim 10, wherein an outer diameter of the connecting head portion is larger than an outer diameter of the connecting rod portion.

12. The electric motor assembling device according to claim 10, wherein the connecting head portion and the connecting rod portion are integrally formed.

13. The electric motor assembling device according to any one of claims 1 to 12, wherein the abutting portion comprises a first abutting portion arranged at a top of the lifting mechanism, and a second abutting portion and a third abutting portion respectively arranged at two sides of the first abutting portion.

14. The electric motor assembling device according to claim 13, wherein the first abutting portion, the second abutting portion and the third abutting portion are integrally formed.

15. The electric motor assembling device according to claim 13, wherein the second abutting portion and the third abutting portion are located at the top of the bearing inner ring and correspond to a position of the bearing inner ring, so as to abut against the top of the bearing inner ring when the rotor shaft moves towards the bearing and is fitted with the bearing inner ring.
